# EUROPEAN PATENT SPECIFICATION

(11) **EP 3 541 244 B1**
(45) Date of publication and mention of the grant of the patent: **21.07.2021**
(21) Application number: 17836046.7
(22) Date of filing: 17.11.2017
(51) Int. Cl.: A47B 95/00, A47B 31/06, A47B 5/04, A47B 9/02, A47B 9/10, A47B 3/083, B60P 3/36, A47B 51/00, A47B 96/07

(54) **SHIFTING AND TILTING DEVICE FOR TABLES IN MULTIPURPOSE VEHICLES**
VERSCHIEBE- UND KIPPVORRICHTUNG FÜR TISCHE IN MEHRZWECKFAHRZEUGEN
DISPOSITIF DE DÉPLACEMENT ET DE BASCULEMENT DE TABLES DANS DES VÉHICULES UTILITAIRES

(30) Priority: 17.11.2016 IT 201600116214
(43) Date of publication of application: 25.09.2019
(73) Proprietor: LCI ITALY S.R.L., 50026 San Casciano Val di Pesa (FI) (IT)
(72) Inventor: ZAPPOLINI, Stefano, 56025 Pontedera (IT)
(74) Representative: Leotta, Antonio
(86) International application number: PCT/IB2017/057218
(87) International publication number: WO 2018/092086

(56) References cited:
- DE-C1- 19 744 311
- JP-A- 2006 020 866
- JP-A- 2012 249 800
- US-A- 2 527 407

## Description

### Technical Field

The invention fits in the technical field relating to the furniture of multi-purpose vehicles, equipped for recreational purposes or as mobile offices.

The type of vehicles to which is made reference is therefore that one of motorhomes, caravans, vanes, minibuses and the like.

### Background Art

To make the most of the available space of these vehicles, it is common practice to use furniture components designed to vary the configuration of the passenger compartment according to the need of the moment, such as to obtain a so-called "dinette", i.e. a table with its seating, or a bed area. A device which can be considered as useful for understanding the invention, is disclosed in DE19744311 C1.

Transformation takes place by means of appropriate maneuvers to shift or lower certain elements, rotate others, bring more others to be used from a rest position, and so on.

In some configurations, they become part of the whole the same front seats of the vehicle, which can be rotated to the rear in order to become in fact armchairs and/or be reclined to be transformed into beds.

Among the elements that most frequently require to be moved to these vehicles are the tables, which are required at most generous dimensions when they are needed and at least cumbersome when they are not.

In the prior art solutions there are various types of mechanisms that govern the handling of said tables from the use position to the rest position, including the simplest ones just with hinge joints up to others more complex with sliding parts, levers and more yet.

The use position is often stabilized by means of folding legs or other devices to be put into operation to prevent accidental fall, which obviously can also be caused by an error or by a misguided operation, with possible fingers crushing or other injuries.

As easy to understand, table legs are very embarrassing in the cockpits of these vehicles, so the solutions that are lacking are particularly appreciated.

In most of these technical solutions, it is required to apply some manual force, both when is needed to lift something and when is needed put down the same thing or something else, since simply dropping by gravity often causes damage to the thing same or near ones, as well as possible dangers of impact with the operator.

Beyond the weight of the above said elements, which is contained for obvious reasons, maneuvers may be uncomfortable for the limited maneuvering spaces and/or the unnatural positions that the body needs to take.

It is also noted that for tables and other furnishing elements in some way comparable, the only two mentioned use and rest configurations are generally provided.

### Summary of Invention

The object of the present invention is therefore to propose a device for handling a piece of furniture in a multipurpose vehicle, structured in such a way that it can be raised and lowered, for arranging it in use or rest position, easier than the known systems.

Another object of the invention is to provide the two raised and lowered positions to be automatically stabilized without support legs, locking devices and the like to be arranged to work.

Yet another object of the invention is to contain the dimensions of the device and to arrange the relative organs in an optimum manner so as not to interfere with the movements of the occupants of the vehicle.

A further object of the invention is that the device may allow the associated furniture element to be provided with other configurations in addition to the classical use and rest ones, so as to obtain multifunctional functions.

Still another object of the invention is that the device is simple to realize, high in reliability and low cost.

These and other objects are fully achieved by means of a furniture element as defined in claim 1.

### Brief Description of Drawings

The features of the invention will become apparent from the following description of a preferred embodiment of the device for handling a furniture element in a multipurpose vehicle, according to the object, in accordance with what is stated in the claims and with the aid of the attached drawings, in which:
- Figure 1 shows a perspective view of the device in question, associated with a supporting plane, with the latter in the raised position;
- Figure 2 shows a front view of what is shown in Figure 1;
- Figure 3 shows a side view of Figure 2, with the supporting plane in two positions;
- Figure 4 shows a view similar to Figure 2, with the supporting plane lowered by the device;
- Figure 5 shows the corresponding side view of Figure 4;
- Figure 6 shows a front view again, with the device as shown in Figure 2 and the supporting plane vertically tilted;
- Figure 7 shows the corresponding side view of Figure 6;
- Fig. 8 shows, in perspective, an enlarged scale detail of a quadrilateral hinge with which the supporting plane is articulated to the device;
- Figure 9 shows a schematic side view of the hinge of Fig. 8 showing its operation.

### Description of Embodiments

In the abovementioned figures, number 1 reference is made to the device for handling, object of the invention, as a whole.

Device 1 is associated with a furniture element 2 of a multipurpose vehicle (not shown) of the type mentioned above, or is equipped for recreational use or as a mobile office, such as a motorhome, a caravan, a van, a minibus or the like.

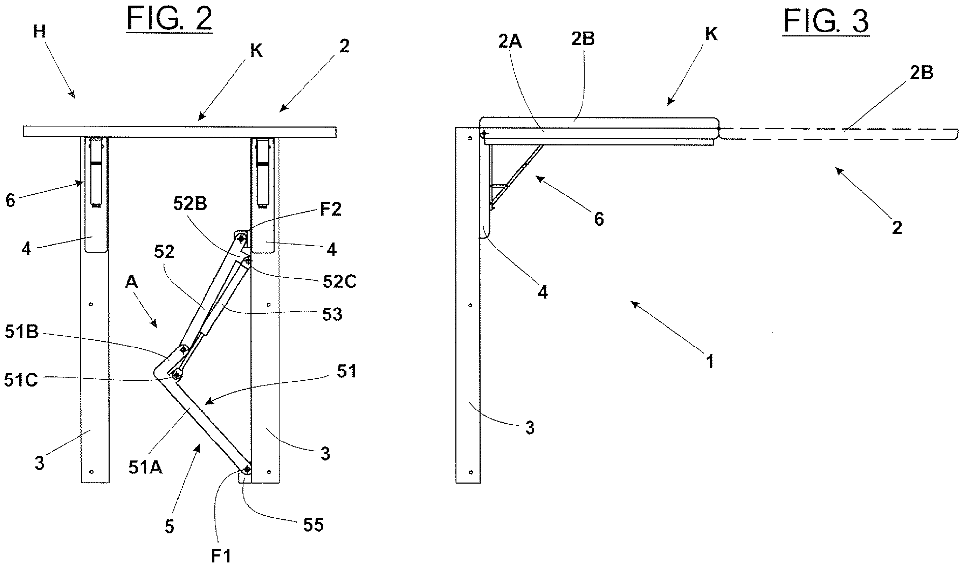

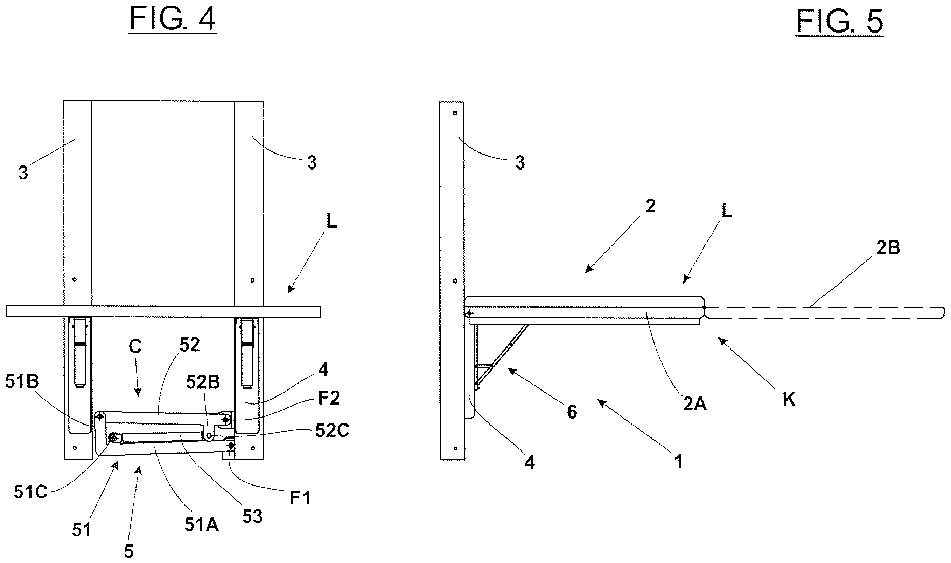

In the example shown in the figures, not limitative, the furniture element comprises a supporting plane 2, which essentially identifies a table, consisting of two portions 2A, 2B, articulated between them in the book type, so that they can be opened to lie side by side and coplanar one to the other or superimposable for reducing their dimensions (see Figures 3 and 5 in particular).

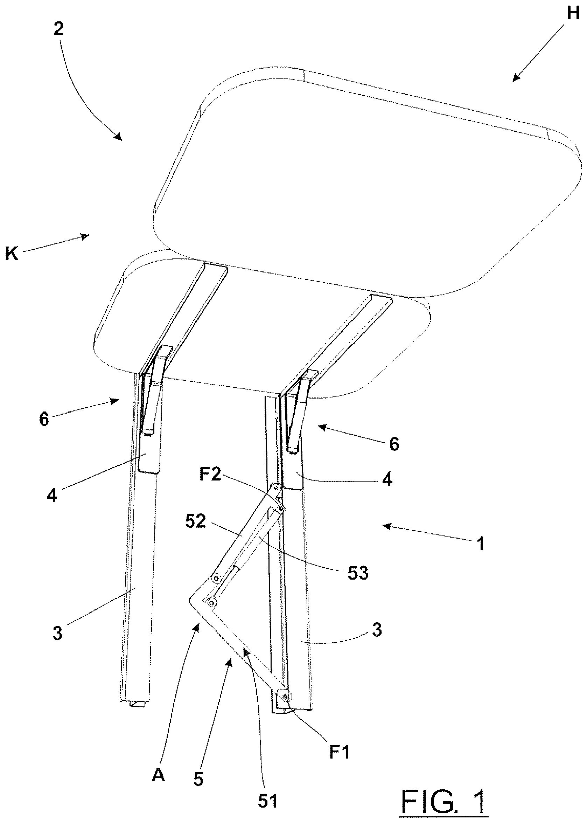

The device 1 comprises at least a vertical guide 3, integral with the structure of the said vehicle, in which is slidably engaged at least one slide 4 associated with said supporting plane 2 and designed to allow the latter to slide vertically between a raised position H (Figs. 1, 2, 3) and a lowered L (Figs. 4, 5), and vice versa.

In the embodiment illustrated there are provided two vertical guides 3, mutually parallel and spaced appropriately, and equal slides 4.

In device 1 there is provided at least one levers kinematism 5, comprising a first lever 51 articulated with one end to a fulcrum F1 having a fixed position, and a second lever 52 articulated with one end to one of the slides 4 in one fulcrum F2.

The fulcrum F1, in the example illustrated, is realized in a plate 55 integral to the lower end of one of the vertical guides 3, but alternatively the same plate 55 can be attached to the said vehicle structure.

The first and second levers 51, 52 are mutually articulated in correspondence of the respective free ends and may have two characteristic configurations, open A (Figures 1, 2, 6) and closed C (Fig. 4) respectively in correspondence of said raised H and lowered L positions of the supporting plane 2.

At least one elastic compression member 53, preferably consisting of a gas spring, is interposed between said first and second levers 51, 52.

The gas spring 53 is articulated with an end to the first lever 51 and with the remaining end to the second lever 52, according to a particular geometry better detailed below.

The first lever 51 is formed by two consecutive branches, first 51A and second 51B, arranged in square, and the eyelet 51C provided for the first articulation of the gas spring 53 is located near the corner between said branches 51A, 51B.

The second lever 52 has substantially rectilinear shape, with a length similar to that of the first branch 51A of said first lever 51; the relative eyelet 52C provided thereon for the second articulation of the gas spring 53 is located in an appendix 52B protruding laterally from the same second lever 52 near the fulcrum F2 according to which the latter is articulated to said slide 4.

In said closed configuration C, the first lever 51 is provided with its first branch 51A substantially orthogonal to the vertical rail 3, while the second lever 52 is substantially parallel to the same first branch 51A (Fig. 4).

The gas spring 53 is in the state of minimum extension, inclined so that the axial push provided by it has a force component tending to maintain said parallelism between the same levers 51, 52 and to stabilize its closed configuration C and, consequently, said lowered position L of the supporting plane 2.

By manually acting on the support plane 2 with an upward push, it is impressed a sliding movement to the slides 4 and therefore to the levers 51, 52 such that it determines the passing of a dead spot beyond which the expansion push of the gas spring 53 is oriented in a direction tending to open the same levers 51, 52 by increasing the angle formed by the same, thus causing the automatic lifting of the supporting plane 2.

At least one of the above-mentioned vertical guides 3 is provided with a stroke end (not shown in detail) for intercepting the corresponding slide 4 when the raised position H of the supporting plane 2 is reached, also defining the maximum opening angle between the said first and second levers 51, 52 arranged in their open configuration A.

In this latter condition, said first and second levers 51, 52 are almost orthogonal to each other, while the gas spring 53 is almost at its maximum extension, inclined so that its axial push has a force component which tends to increase the angle formed by the same levers 51, 52.

In the preferred embodiment of the figures, the second lever 52 is arranged to form, with the first branch 51A of the first lever 51, an angle slightly greater than 90° (see particularly Fig. 2).

With the end stop intercepted by the slide 4, the open configuration A of the levers 51, 52 and the raised position H of the supporting plane 22 is stabilized.

To prevent the supporting plane 2 being lowered as a result of a load higher than the resistance provided by the gas spring 53, a mechanical member may be advantageously provided for locking said raised position H.

Said member, not illustrated as of known art, can be, for example, a manually actionable latch for locking/unlocking the sliding of slide 4, or a harpoon that automatically snaps into the lock position when said raised position H is reached, to be released later by manual action.

To bring back the supporting plane 2 to the lowered position L, it is necessary to unlock said mechanical locking member, if present, so it is possible to act directly on the supporting plane 2 with a downward push, winning the elastic spring reaction of the gas spring 53.

Upon reaching the described closed configuration C of the levers 51, 52, beyond its dead point, the supporting plane 2 remains stationary in its lowered position L (Fig. 4).

For some applications, the supporting plane 2 in its lowered position L (Figs. 3, 4) has an operational function; in fact, it can advantageously constitute an extension of the seating plan of a sofa or a seat, facilitating the conversion into bed of the same.

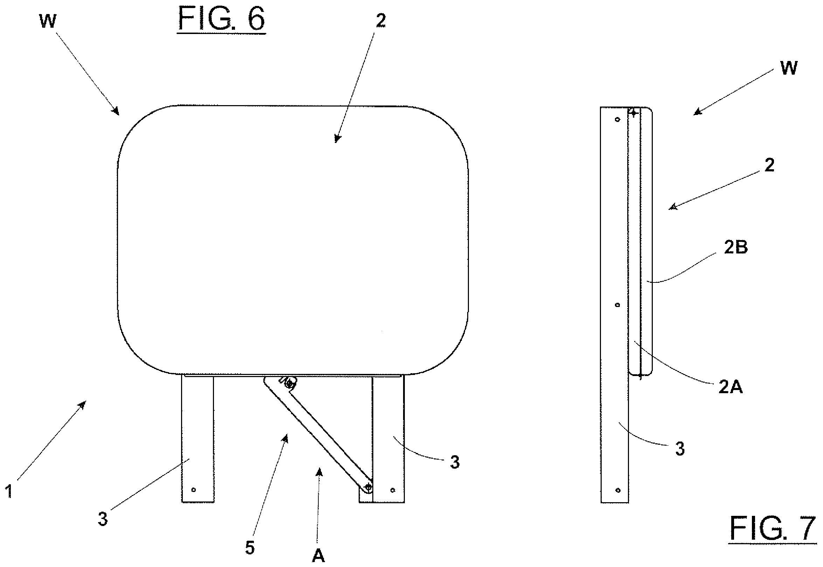

The supporting plane 2 illustrated is advantageously associated with the two slides 4 with the interposition of corresponding quadrilateral hinges 6 with horizontal axis, able to define for the same supporting plane 2 two positions, respectively horizontal working K (Figs. 1 to 5) and vertical resting W (Figs. 6 and 7).

Each hinge 6 comprises two wings 61, 62, of which the first 61 integral with the respective said slide 4 and the second 62 integral with said supporting plane 2, in this case to the first portion 2A of the latter.

The wings 61, 62 are interconnected by a diagonal strut 63, articulated in two consecutive pieces 63A, 63B, which are substantially aligned to said horizontal working position K (Figs. 1, 3, 5, 8) and folded one onto the other in the vertical resting position W.

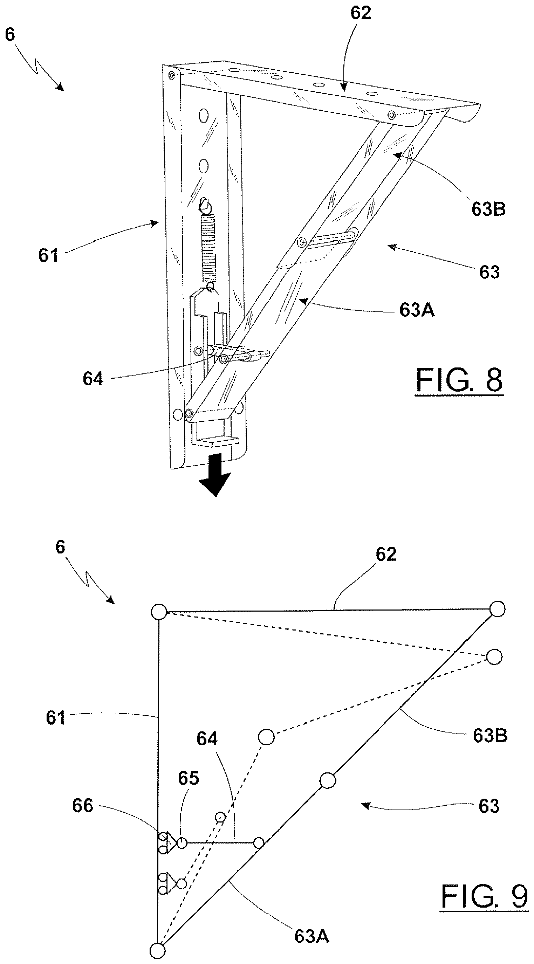

In the hinge 6 is also provided a stabilizing strut 64 hinged to said diagonal strut 63 and further bonded to the first wing 61 by means of a joint 65 associated with a carriage 66, with the latter being able to slide parallel to the same first wing 61 (see, in particular, Fig. 9).

The stabilizing strut 64 is substantially perpendicular to the first wing 61 in correspondence of said horizontal working position K of the supporting plane 2 so as to block the alignment of the diagonal strut 63 and prevent it from rotating downwardly from the supporting plane 2.

To achieve this rotation, it is sufficient to manually push the diagonal strut 63 of each hinge 6 until the respective stabilizing struts 64 move from their previous position.

From the foregoing, they bring out the peculiar features of the device proposed by the present invention, which by means of its original conformation, allows to most automatically raise the table or the corresponding furnishing element, and lower it by means of simple maneuvers and limited efforts, without the risk of accidental falls and accidents.

In particular, as with respect to various known solutions, it is not necessary support legs, locking devices and the like to be provided for working, therefore, except of further unwanted drawbacks, a significant acceleration of the maneuvers is achieved.

The device, in the preferred illustrated and described embodiment, has very small dimensions, all of which can be attached to the structure of the vehicle, such as a side panel, with no obstruction elements for the legs of the occupants.

The double stabilization of the table both as raised and as lowered, makes it also possible to exploit this latter position, as specified in the previous description.

Another advantageous aspect comes from the constructive simplicity of the device, which is why it is reliable and cost-effective.

It is understood however that what has been described above has value of example and not of limitation, and therefore any detail variations which may be necessary in performing the phases described, for technical and / or functional reasons, are considered as from now on within the same protective scope defined by the following claims.

## Claims

1. Furniture element comprising a supporting plane (2) and a device (1) for handling a furniture element for a multipurpose vehicle, said device being suitable for being made integral with the structure of the mentioned vehicle, with said furniture element comprising a supporting plane (2) and with the above said device (1) comprising:
- at least a vertical guide (3), in which is slidably engaged at least one slide (4) associated to said supporting plane (2) and intended to enable the latter to a vertical excursion between a raised position (H) and a lowered position (L), and vice versa;
- at least one levers kinematism (5), comprising a first lever (51), articulated with one end to a fulcrum (F1) having a fixed position, and a second lever (52), articulated with one end to said slide (4), the same first and second levers (51, 52) being mutually articulated in correspondence of the respective free ends and intended to reach two peculiar configurations, open (A) and closed (C), respectively in correspondence of the mentioned raised positions (H) and lowered position (L) of the above said supporting plane (2);
- at least one elastic compression member (53), articulated with its ends to the mentioned first and second levers (51, 52), according to a geometry such that when said levers kinematism (5) is in the closed configuration (C) the push action of said elastic member (53) urges said levers (51, 52) in a direction tending to stabilize their closed configuration (C) and the mentioned lowered position (L) of the supporting plane (2), while, when said levers kinematism (5) is moved by a predetermined amount from said closed configuration (C), the push action of the same elastic member (53) urges said levers (51, 52) in a direction tending to determine the automatic lifting and the stabilization of said open configuration (A) of the levers (51, 52) and the mentioned raised position (A) of the same supporting plane (2)
**characterized in that** the mentioned first lever (51) is shaped square angled, and that an eyelet (51C) provided on the same for the first articulation of said elastic compression member (53) is located close to the corner formed by the two branches (51A, 51B) of said first lever (51), **in that** the mentioned second lever (52) has a substantially rectilinear shape, with a length similar to that of the first branch (51A) of said first lever (51), and that a corresponding eyelet (52C) provided on it for the second articulation of said elastic member (53) is located in an appendix (52B) projecting laterally from the same second lever (52), close to a fulcrum (F2) according to which the latter is articulated to said slide (4), **in that** in the mentioned closed configuration (C) the first square angled lever (51) is arranged with its first branch (51A) substantially orthogonal to said vertical guide (3), the said second lever (52) is substantially parallel to the same first branch (51A) and said elastic member (53) is in the condition of minimum extension, inclined so that its axial push action has a force component tending to keep the mentioned parallelism between the same levers (51, 52), so that the said displacement imparted to the latter must determine the overcoming of a dead point beyond which the elastic push force is able to make them open as a compass, and **in that** in the mentioned open configuration (A) the said first and second lever (51, 52) are mutually almost orthogonal and said elastic member (53) is in the condition next to the maximum extension, inclined so that its axial push action has a force component tending to increase the angle formed by the same levers (51, 52).

2. Furniture element according to claim 1 **characterized in that** said at least one compression elastic member (53) is a gas spring.

3. Furniture element according to claim 1 **characterized in that** in the above said vertical guide (3) is provided an end stop arranged to intercept the said slide (4) when the above said raised position (H) of the supporting plane (2) is reached, so as defining a maximum opening angle between said first and second levers (51, 52) arranged in their mentioned open configuration (A).

4. Furniture element according to claim 1 **characterized in that** they are provided means for locking the above said raised position (H) of the supporting plane (2).

5. Furniture element according to claim 1 **characterized in that** between the mentioned slide (4) and the supporting plane (2) is interposed at least one articulated quadrilateral hinge (6) with horizontal axis, capable of defining for the same supporting plane (2) two positions, respectively horizontal working (K) and vertical resting (W), with the above said hinge (6) comprising two wings (61, 62), of which the first (61) integral with said slide (4) and the second (62) integral to the mentioned supporting plane (2), interconnected by a diagonal strut (63), articulated in two consecutive parts (63A, 63B), which are substantially aligned in correspondence to the mentioned horizontal working position (K) and folded one over the other in said vertical resting position (W), in the same hinge (6) being also provided a stabilizing strut (64), hinged to said diagonal strut (63) and further constrained to said first wing (61) by means of a joint (65) associated to a carriage (66) arranged to slide parallel to the same first wing (61), with said stabilizing strut (64) provided to be substantially perpendicular to the latter in correspondence of said horizontal working position (K) of the supporting plane (2), so as to block the mentioned aligned configuration of the diagonal strut (63) and prevent the rotation of the same supporting plane (2).

6. Furniture element according to one of the preceding claims, **characterized in that** said supporting plane (2) is formed by two consecutive portions (2A, 2B) mutually articulated as a book, arranged side by side and coplanar in correspondence of a first configuration and folded one on the other in a second configuration.

## Patentansprüche

1. Möbelelement mit einer Stützebene (2) und einer Vorrichtung (1) zur Handhabung eines Möbelelements für ein Mehrzweckfahrzeug, wobei die Vorrichtung dazu geeignet ist, mit der Struktur des genannten Fahrzeugs fest verbunden zu werden, wobei das Möbelelement eine Stützebene (2) umfasst und wobei die oben genannte Vorrichtung (1) umfasst:
- mindestens eine vertikale Führung (3), in der mindestens ein Schlitten (4) gleitend in Eingriff steht und mit der Trägerebene (2) verbunden ist und dazu bestimmt ist, letzterer eine vertikale Auslenkung zwischen einer angehobenen Position (H) und einer abgesenkten Position (L) und umgekehrt zu ermöglichen;
- mindestens einen Hebelkinematismus (5), der einen ersten Hebel (51), der mit einem Ende an einem Drehpunkt (F1) angelenkt ist, der sich an einer festen Position befindet, und einen zweiten Hebel (52), der mit einem Ende an dem Schlitten (4) angelenkt ist, umfasst, wobei die gleichen ersten und zweiten Hebel (51, 52) in Übereinstimmung mit den jeweiligen freien Enden aneinander angelenkt sind und dazu bestimmt sind, zwei besondere Konfigurationen zu erreichen, eine offene Konfiguration (A) und eine geschlossene Konfiguration (C), jeweils in Übereinstimmung mit den erwähnten angehobenen Positionen (H) und abgesenkten Positionen (L) der oben genannten Stützebene (2);
- mindestens ein elastisches Druckelement (53), das mit seinen Enden an den erwähnten ersten und zweiten Hebeln (51, 52) gemäß einer solchen Geometrie angelenkt ist, so dass, wenn sich die Hebelkinematik (5) in der geschlossenen Konfiguration (C) befindet, die Druckwirkung des elastischen Elements (53) die Hebel (51, 52) in eine Richtung drückt, die darauf abzielt, ihre geschlossene Konfiguration (C) und die erwähnte abgesenkte Position (L) der Stützebene (2) zu stabilisieren, wobei, wenn die Hebelkinematik (5) um einen vorbestimmten Betrag aus der geschlossenen Konfiguration (C) bewegt wird, die Schubwirkung desselben elastischen Elements (53) die Hebel (51, 52) in eine Richtung drückt, die darauf abzielt, das automatische Anheben und die Stabilisierung der offenen Konfiguration (A) der Hebel (51, 52) und der erwähnten angehobenen Position (A) derselben Stützebene (2) zu bestimmen
**dadurch gekennzeichnet, dass** der erwähnte erste Hebel (51) als rechter Winkel geformt ist, und dass eine Öse (51C), die an diesem für die erste Anlenkung des elastischen Druckelements (53) vorgesehen ist, in der Nähe der durch die beiden Schenkel (51A, 51B) des ersten Hebels (51) gebildeten Ecke angeordnet ist, **dass** der erwähnte zweite Hebel (52) eine im Wesentlichen geradlinige Form hat, mit einer Länge ähnlich der des ersten Schenkels (51A) des ersten Hebels (61), **dass** eine entsprechende Öse (52C), die an ihm für die zweite Anlenkung des elastischen Elements (53) vorgesehen ist, in einem Fortsatz (52B) angeordnet ist, der seitlich von demselben zweiten Hebel (62) vorsteht, in der Nähe eines Drehpunkts (F2), durch den der zweite Hebel an dem Schieber (4) angelenkt ist, **und dass** in der erwähnten geschlossenen Konfiguration (C) der erste rechtwinklige Hebel (51) mit seinem ersten Zweig (51A) im Wesentlichen orthogonal zu der vertikalen Führung (3) angeordnet ist, der zweite Hebel (52) im Wesentlichen parallel zu demselben ersten Zweig (51A) ist und das elastische Element (53) im Zustand minimaler Ausdehnung ist, so geneigt ist, dass seine axiale Schubwirkung eine Kraftkomponente aufweist, die dazu neigt, die erwähnte Parallelität zwischen denselben Hebeln (51, 52) aufrechtzuerhalten, so dass die auf letztere ausgeübte Verschiebung die Überwindung eines Totpunkts bestimmt, jenseits dessen die elastische Schubkraft in der Lage ist, sie als Zirkel zu öffnen, **und dass** in der erwähnten offenen Konfiguration (A) der erste und der zweite Hebel (51, 52) zueinander nahezu orthogonal sind und das elastische Element (53) sich in dem Zustand nahe der maximalen Ausdehnung befindet und so geneigt ist, dass seine axiale Schubwirkung eine Kraftkomponente aufweist, die dazu neigt, den von denselben Hebeln (51, 52) gebildeten Winkel zu vergrößern.

2. Möbelelement nach Anspruch 1, **dadurch gekennzeichnet, dass** das mindestens eine druckelastische Element (53) eine Gasfeder ist.

3. Möbelelement nach Anspruch 1, **dadurch gekennzeichnet, dass** ein Endanschlag in der oben erwähnten vertikalen Führung (3) vorgesehen ist, um den Schlitten (4) abzufangen, wenn die oben erwähnte angehobene Position (H) der Stützebene (2) erreicht ist, so dass ein maximaler Öffnungswinkel zwischen dem ersten und dem zweiten Hebel (51, 52) definiert wird, die in ihrer erwähnten offenen Konfiguration (A) angeordnet sind.

4. Möbelelement nach Anspruch 1, **dadurch gekennzeichnet, dass** Mittel zum Verriegeln der oben genannten angehobenen Position (H) der Stützebene (2) vorgesehen sind.

5. Möbelelement nach Anspruch 1, **dadurch gekennzeichnet, dass** mindestens ein gelenkiges, vierseitiges Scharnier (6) mit horizontaler Achse zwischen dem oben genannten Schlitten (4) und der Stützebene (2) angeordnet ist, wobei das Scharnier in der Lage ist, für dieselbe Stützebene (2) zwei Positionen zu definieren, nämlich eine horizontale Arbeitsposition (K) und eine vertikale Ruheposition (VV), wobei das oben genannte Scharnier (6) zwei Flügel (61, 62) umfasst, von denen der erste Flügel (61) fest mit dem Schlitten (4) verbunden ist und das zweite Flügel (62) fest mit der erwähnten Stützebene (2) verbunden ist, die durch eine diagonale Stütze (63) miteinander verbunden sind, die in zwei aufeinanderfolgenden Teilen (63A, 63B) angelenkt ist, die im Wesentlichen in Übereinstimmung mit der erwähnten horizontalen Arbeitsposition (K) ausgerichtet und in der vertikalen Ruheposition (WV) übereinander gefaltet sind, wobei in demselben Scharnier (6) auch eine Stabilisierungsstütze (64) vorgesehen ist, die an der diagonalen Stütze (63) angelenkt ist und ferner an dem ersten Flügel (61) mittels eines Gelenks (65) gehalten wird, das mit einem Schlitten (66) verbunden ist, der so angeordnet ist, dass er parallel zu demselben ersten Flügel (61) gleitet, wobei die Stabilisierungsstütze (64) so vorgesehen ist, dass sie in Übereinstimmung mit der horizontalen Arbeitsposition (K) der Stützebene (2) im Wesentlichen senkrecht zu dem ersten Flügel ist, um die erwähnte ausgerichtete Konfiguration der Diagonalstrebe (63) zu blockieren und die Drehung der gleichen Stützebene (2) zu verhindern.

6. Möbelelement nach einem der vorhergehenden Ansprüche, **dadurch gekennzeichnet, dass** die Stützebene (2) durch zwei aufeinanderfolgende Abschnitte (2A, 2B) gebildet wird, die gegenseitig buchartig angelenkt sind, nebeneinander und koplanar in Übereinstimmung mit einer ersten Konfiguration angeordnet sind und in einer zweiten Konfiguration aufeinander gefaltet sind.

## Revendications

1. Elément de meuble comprenant un plan de support (2) et un dispositif (1) pour manipuler un élément de meuble pour un véhicule polyvalent, ledit dispositif étant approprié pour être rendu intégral avec la structure du véhicule mentionné, avec ledit élément de meuble comprenant un plan de support (2) et avec ledit dispositif (1) ci-dessus comprenant :
- au moins un guide vertical (3), dans lequel se trouve au moins une glissière (4) qui est engagée de manière coulissante et associée audit plan de support (2) et destinée à permettre à ce dernier une excursion verticale entre une position élevée (H) et une position abaissée (L), et inversement;
- au moins un cinématisme à leviers (5), comprenant un premier levier (51), articulé avec une extrémité à un point d'appui (F1) situé à une position fixe, et un second levier (52) qui est articulé avec une extrémité à ladite glissière (4), les mêmes premier et second leviers (51, 52) étant mutuellement articulés en correspondance des extrémités libres respectives et destinés à atteindre deux configurations particulières, une configuration ouverte (A) et une configuration fermée (C), respectivement en correspondance des positions relevées (H) et abaissées (L) mentionnées du plan de support (2) susmentionné;
- au moins un élément élastique de compression (53), articulé avec ses extrémités aux premier et second leviers (51, 52) mentionnés, selon une géométrie telle que lorsque ledit cinématisme des leviers (5) est dans la configuration fermée (C), l'action de poussée dudit élément élastique (53) pousse lesdits leviers (51, 52) dans une direction visant à stabiliser leur configuration fermée (C) et la position abaissée (L) mentionnée du plan de support (2), tandis que lorsque ledit cinématisme des leviers (5) est déplacé d'une quantité prédéterminée à partir de ladite configuration fermée (C), l'action de poussée du même élément élastique (53) pousse lesdits leviers (51, 52) dans une direction visant à déterminer le levage automatique et la stabilisation de ladite configuration ouverte (A) des leviers (51, 52) et la position élevée mentionnée (A) du même plan de support (2),
**caractérisé en ce que** le premier levier (51) mentionné a la forme d'un angle droit, et qu'un oeillet (51C) prévu sur celui-ci pour la première articulation dudit élément élastique de compression (53) est situé près du coin formé par les deux branches (51A, 51B) dudit premier levier (51), **en ce que** le second levier mentionné (52) a une forme sensiblement rectiligne, avec une longueur similaire à celle de la première branche (51A) dudit premier levier (61), et **en ce qu'**un oeillet correspondant (52C) prévu sur celui-ci pour la seconde articulation dudit élément élastique (53) est situé dans un appendice (52B) faisant saillie latéralement à partir du même second levier (62), près d'un point d'appui (F2) par lequel le second levier est articulé sur ladite glissière (4), **en ce que** dans la configuration fermée mentionnée (C), le premier levier à angle droit (51) est disposé avec sa première branche (51A) sensiblement orthogonale audit guide vertical (3), ledit second levier (52) est sensiblement parallèle à la même première branche (51A) et ledit élément élastique (53) est dans la condition d'extension minimale, incliné de telle sorte que son action de poussée axiale présente une composante de force tendant à maintenir le parallélisme mentionné entre les mêmes leviers (51, 52), de sorte que ledit déplacement imprimé à ces derniers détermine le dépassement d'un point mort au-delà duquel la force de poussée élastique est en mesure de les rendre ouverts comme un compas, et **en ce que**, lorsque dans la configuration ouverte mentionnée (A), lesdits premier et second leviers (51, 52) sont mutuellement presque orthogonaux et ledit élément élastique (53) est dans la condition proche de l'extension maximale, incliné de sorte que son action de poussée axiale a une composante de force tendant à augmenter l'angle formé par les mêmes leviers (51, 52).

2. Elément de meuble selon la revendication 1, **caractérisé en ce que** ledit au moins un membre élastique de compression (53) est un ressort à gaz.

3. Elément de meuble selon la revendication 1, **caractérisé en ce qu'**une butée d'extrémité est prévue dans le guide vertical (3) mentionné ci-dessus pour intercepter ledit coulisseau (4) lorsque ladite position relevée (H) du plan de support (2) est atteinte, de manière à définir un angle d'ouverture maximum entre lesdits premier et second leviers (51, 52) disposés dans leur configuration ouverte (A) mentionnée.

4. Elément de meuble selon la revendication 1, **caractérisé en ce que** des moyens sont prévus pour verrouiller la position relevée (H) susmentionnée du plan de support (2).

5. Elément de meuble selon la revendication 1, **caractérisé en ce qu'**au moins une charnière quadrilatérale articulée (6) est interposée avec un axe horizontal entre la glissière (4) mentionnée ci-dessus et le plan de support (2), laquelle charnière est capable de définir pour le même plan de support (2) deux positions, respectivement une position de travail horizontale (K) et une position de repos verticale (VV), avec ladite charnière (6) ci-dessus comprenant deux ailes (61, 62), dont la première aile (61) est solidaire de ladite glissière (4) et la deuxième aile (62) est solidaire du plan de support (2) mentionné, interconnectées par une entretoise diagonale (63), articulée en deux parties consécutives (63A, 63B), qui sont sensiblement alignées en correspondance avec la position de travail horizontale (K) mentionnée et pliées l'une sur l'autre dans ladite position de repos verticale (VV), dans la même charnière (6) étant également prévue une entretoise de stabilisation (64), articulée à ladite entretoise diagonale (63) et en outre contrainte à ladite première aile (61) au moyen d'une articulation (65) associée à un chariot (66) disposé pour coulisser parallèlement à la même première aile (61), avec ladite entretoise de stabilisation (64) prévue pour être sensiblement perpendiculaire à la première aile en correspondance avec ladite position de travail horizontale (K) du plan de support (2), de manière à bloquer la configuration alignée mentionnée de l'entretoise diagonale (63) et à empêcher la rotation du même plan de support (2).

6. Elément de meuble selon l'une des revendications précédentes, **caractérisé en ce que** ledit plan de support (2) est formé par deux parties consécutives (2A, 2B) mutuellement articulées en forme de livre, disposées côte à côte et coplanaires en correspondance d'une première configuration et pliées l'une sur l'autre dans une deuxième configuration.
